Europäisches Patentamt

European Patent Office

Office européen des brevets

(11) Veröffentlichungsnummer: **0 076 472**
**B1**

(12) EUROPÄISCHE PATENTSCHRIFT

(45) Veröffentlichungstag der Patentschrift:
30.04.86

(21) Anmeldenummer: 82109046.1

(22) Anmeldetag: 30.09.82

(51) Int. Cl.⁴: **B 65 G  69/04,** B 01 J  8/00,
B 01 J  2/16, A 23 C  9/16,
F 23 K  3/00, B 01 F  5/24,
B 05 B  1/26

(54) Vorrichtung zum gleichmässigen Verteilen eines Schüttgutstroms.

(30) Priorität: 01.10.81 GB 8129652

(43) Veröffentlichungstag der Anmeldung:
13.04.83 Patentblatt 83/15

(45) Bekanntmachung des Hinweises auf die Patenterteilung:
30.04.86 Patentblatt 86/18

(84) Benannte Vertragsstaaten:
DE FR IT NL SE

(56) Entgegenhaltungen:
DE - A - 2 554 032
DE - A - 2 813 865
DE - C - 237 901
DE - C - 933 928
FR - A - 1 060 698
GB - A - 2 016 901
GB - A - 2 053 708
US - A - 2 209 842

(73) Patentinhaber: Babcock Spraymixer Limited, 11, The Boulevard, Crawley, Sussex RH 10 1UX (GB)

(72) Erfinder: Hilgraf, Peter, Ing., Meiendorfer Strasse 23a, D-2000 Hamburg 73 (DE)
Erfinder: Somhegyi, Ivan, Ing., Lasbeker Strasse 22, D-2071 Tremsbüttel (DE)

(74) Vertreter: Glawe, Delfs, Moll & Partner Patentanwälte, Postfach 26 01 62 Liebherrstrasse 20, D-8000 München 26 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich auf eine Vorrichtung zum gleichmäßigen Verteilen eines pneumatisch geförderten Schüttgutstroms auf eine ausgedehntere, ggf. durch Wände in Teilströmungsquerschnitte aufgeteilte Querschnittsfläche mit einer Zuführungskammer für das Schüttgut, die eine Einlaßöffnung und einen zu seiner Auslaßöffnung hin konvergierenden Auslaßkanal bildet, und einem sich daran anschließenden Verteilerkegel.

Bei der Befeuchtung von staubförmigem oder feinkörnigem Schüttgut durch Besprühen in einem Sprühmischbehälter, in welchem das Schüttgut in einem fallenden oder aufsteigenden Strom vom Umfang her mit Flüssigkeit besprüht wird (DE-AS 26 02 454), ist es zur Erzielung einer gleichmäßigen Beaufschlagung des Feststoffes mit der Flüssigkeit wichtig, daß der Feststoff, vom Umfang des Behälters her gesehen, sehr gleichmäßig verteilt ist. Dies ist ein Anwendungsgebiet der Erfindung.

Bei der Befeuerung von Kesseln oder Öfen im Wirbel- oder Fließbett ist Voraussetzung für eine gleichmäßige Verbrennung, daß dem Bett pro Flächeneinheit an jeder Stelle die gleiche Menge Kohlenstaub pro Zeiteinheit zugeteilt wird. Gelingt dies nicht, so tritt an den Stellen, an denen zuviel Kohlenstaub aufgegeben wird, entweder eine unvollständige Verbrennung ein, oder die gesamte Feuerung muß mit einem überhöhten Luftüberschuß betrieben werden. Die gesonderte Dosierung des Kohlenstaubs in jeder diesen Beschickungsfeldern zugeordneten Förderströmen ist sehr aufwendig. Ein weiteres Anwendungsgebiet der Erfindung ist daher die gleichmäßige Verteilung eines Schüttgutförderstroms derart auf einen ausgedehnteren Querschnitt, daß eine Aufteilung dieses Querschnitts durch Trennwände zu einer entsprechenden Vielzahl gleicher Förderströme führt.

Bei einer bekannten Vorrichtung der eingangs genannten Art (DE-OS 28 13 865) tritt das pneumatisch geförderte Schüttgut aus einer sich in Strömungsrichtung verengenden Kammer, die das Ende eines Zuführungsrohrs sein mag, vertikal und zentrisch zu dem darunter angeordneten Verteilerkegel aus, der den Schüttgutstrom gleichmäßig nach allen Seiten hin ablenkt und dadurch auf einen größeren Querschnitt verteilt. Der Kegelwinkel des Verteilerkegels nimmt von der Spitze zu seiner Abströmungskante hin zu. Das von dem Verteilerkegel in Gestalt eines Hohlkonus abströmende Gut kann über den Umfang verteilten Düsenstrahlen zur gleichmäßigen Anreicherung mit Flüssigkeit ausgesetzt werden. - Das Ziel einer sehr gleichmäßigen Verteilung des Schüttguts läßt sich mit der bekannten Vorrichtung nicht erreichen, weil der pneumatische Förderstrom nicht gleichmäßig mittig auf den Verteilerkegel gelenkt werden kann. Ein pneumatischer Förderstrom hat nämlich die Eigenart, daß die Feststoffpartikeln in der Regel nicht gleichmäßig über den gesamten Förderquerschnitt verteilt sind, sondern sogenannte Strähnen bilden, das sind Querschnittsbereiche mit höherer Feststoffkonzentration im Gegensatz zu anderen Querschnittsbereichen geringer Konzentration, wobei unterschiedliche Strömungsgeschwindigkeiten in diesen Bereichen zur Aufrechterhaltung der instabilen Verteilungsverhältnisse beitragen. Deshalb kann bei der bekannten Vorrichtung mit einer gleichmäßigen Feststoffverteilung in dem aus der Austrittsöffnung auf den Verteilerkegel austretenden Feststoffstroms nicht gerechnet werden. - Dieses Problem tritt nicht auf, wenn Schüttgut ohne pneumatische Förderung in einer senkrechten Förderleitung lediglich frei fällt, wie dies bei einer anderen bekannten Vorrichtung (FR-A 10 60698; DE-C 933 928) vorgesehen ist, bei der deshalb auch keine weiteren Vorkehrungen zur Vergleichmäßigung des Schüttgutstroms getroffen sind. - Schließlich ist es bekannt (GB-A 20 16 901) das Schüttgut aus einem pneumatisch geförderten Strom in einem Zyklon abzuscheiden, vertikal fallend in einen Behälter einzuführen und zentrisch auf einen Kegel fallenzulassen, wodurch die mit Dampf befeuchteten Partikeln zu Agglomeraten verfestigt werden sollen. Mittel zur besonders gleichmäßigen Verteilung eines Schüttgutstroms auf einen größeren Querschnitt sind darin nicht vorgesehen.

Der Erfindung liegt die Aufgabe zugrunde, das pneumatisch geförderte Schüttgut in hoher Gleichmäßigkeit zu verteilen.

Die erfindungsgemäße Lösung besteht darin, daß die mit dem Auslaßkanal koaxiale Einlaßöffnung enger als die Zuführungskammer ausgebildet ist und einem konvergierenden, ebenfalls koaxialen Rohrstück folgt.

Infolge der in einem pneumatischen Förderstrom anzutreffenden Geschwindigkeitsunterschiede bilden sich darin Wirbel aus, die Querimpulse auf die geförderten Partikeln ausüben, so daß die Förderpartikeln im allgemeinen nicht nur eine Bewegungskomponente in Förderrichtung, sondern auch quer dazu aufweisen. Daher kommt es, daß der aus der Einlaßöffnung in die Zuführungskammer eintretende Strom nicht wie ein Flüssigkeitsstrahl scharf begrenzt die Zuführungskammer durchschießt, sondern sich darin aufweitet, zumal er nicht wie ein Flüssigkeitsstrahl durch Kohäsionskräfte zusammengehalten ist. Da gleichzeitig durch den Übertritt in den größeren Querschnitt der Zuführungskammer die Strömungsverhältnisse gebrochen sind, die zuvor für die Aufrechterhaltung der Strähnenbildung verantwortlich waren und da ferner der Schüttgutstrom zentrisch in die Zuführungskammer eintritt, verteilt sich das Gut verhältnismäßig gleichmäßig in der Zuführungskamer. Wird es nun am Auslaßende durch den konvergierenden Auslaßkanal wiederum zusammengefaßt, so ist es im Auslaßkanal mit hoher Gleichmäßigkeit um die Mittelachse verteilt und erreicht in dieser gleichmäßigen Verteilung auch den sich anschließenden Verteilerkegel. Die gleichmäßige Verteilung des Schüttguts im Zuführungsraum wird dabei durch das konvergierende Rohrstück, das der Einlaßöffnung vorgeschaltet ist, weiter verbessert.

Vorzugsweise setzt sich die Kegelfläche des Verteilerkegels aus zwei aufeinanderfolgenden Kegelflächen unterschiedlichen Kegelwinkels zusammen, wobei der Kegelwinkel an der Spitze vorzugsweise kleiner und am entgegengesetzten Ende größer als 60° ist. Dies ist an sich bekannt (DE-C 933 928).

Zweckmäßigerweise umfaßt die Vorrichtung Einrichtungen zum Bewegen des Verteilerkegels im Verhältnis zum Zuführungsraum zwecks Änderung der Abmessungen des hohlen Vorhangs, die eine sich durch den Auslaßkanal längs dessen Mittelachse erstreckende Tragstange aufweisen, wobei der erste Kegelteil an das Ende der Tragstange angeschlossen ist. Vorzugsweise ist der erste Teil und/oder der zweite Teil des Verteilerkegels kreiskonisch geformt und wirkt er mit der Anslaßöffnung zur Bildung eines ringförmigen Vorhangs gleichmäßig verteilten Schüttguts zusammen. Jedoch kann der Verteilerkegel auch eine andere als eine kreisförmige Grundfläche aufweisen. Wenn die Grundfläche beispielsweise polygonal ist, setzt sich die Kegelfläche aus einer der Seitenzahl des Polygons entsprechenden Zahl von Dreiecken (bzw. im zweiten Konusteil Trapezen) pyramidenförmig zusammen. Es kann auch vorgesehen sein, daß die solchermaßen durch Kanten voneinander geschiedenen Kegelflächen konkave Riemen sind, um das auf sie entfallende Schüttgut in Gestalt von Teilströmen zu fassen und zu bündeln. Jedenfalls sollte der Kegel ein gerader Kegel sein, d.h. seine Mittelachse solle senkrecht stehen auf derjenigen Fläche, die sein Abströmende begrenzt.

Der Kegelwinkel des ersten, sich an die Auslaßöffnung anschließenden Kegelteils liegt nach der Erfindung in der Größenordnung von 45° (beispielsweise 30°-55°) und der des zweiten Kegelteils in der Größenordnung von 90° (beispielsweise 70°-120°).

Zweckmäßig ist es auch, wenn die Vorrichtung eine im wesentlichen kreisförmige Wand aufweist, die den Verteilerkegel (zweckmäßigerweise konzentrisch) umgibt und gegen die das vom Verteilerkegel abströmende Material prallt, um von ihr aus in gleichmäßiger Verteilung längs eines Kreises nach unten zu fallen.

Da die Vorrichtung an eine pneumatische Förderleitung angeschlossen ist, ist es zweckmäßig, die Geschwindigkeit des Gas- bzw. Förderstroms wesentlich herabzusetzen, indem die Förderleitung vor dem Erreichen der Zuführungskammer eine Querschnittserweiterung mit Diffusor bildet, um anschließend in das konvergierende Rohrstück zum Bündeln des Schüttgutstroms überzugehen. Die Erweiterung ist insbesondere dann zweckmäßig, wenn die Förderleitung unmittelbar vor dem Zuführungsraum einen Bogen bildet, wobei die Erweiterung diesen Bogen zweckmäßigerweise umfaßt.

Die Zuführungskammer mit Einlaßöffnung, Auslaßkanal und Verteilerkegel ist zweckmäßigerweise vertikal angeordnet, wobei die Strömungsrichtung sowohl steigend als auch vorzugsweise fallend vorgesehen sein kann. Dadurch werden Verzerrungen des Strömungsbildes durch die Schwerkraft, insbesondere bei mäßigen Geschwindigkeiten, vermieden.

Die Erfindung wird im folgenden näher unter Bezugnahme auf die in den Zeichnungen dargestellten Ausführungsbeispiele erläutert. Darin zeigen:

Fig.1 eine Vorrichtung zur Bildung eines im Querschnitt kreisförmigen Vorhangs von gleichmäßig verteiltem staubförmigem oder feinkörnigem Material am Kopf eines Sprühmischbehälters,

Fig.2 die Vorrichtung gemäß Fig. 1 in größerem Maßstab,

Fig. 3 eine Vorrichtung zum Aufteilen eines Schüttgutstroms in eine Mehrzahl gleicher Teilströme,

Fig. 4 einen Schnitt gemäß Linie IV-IV der Fig. 3 und

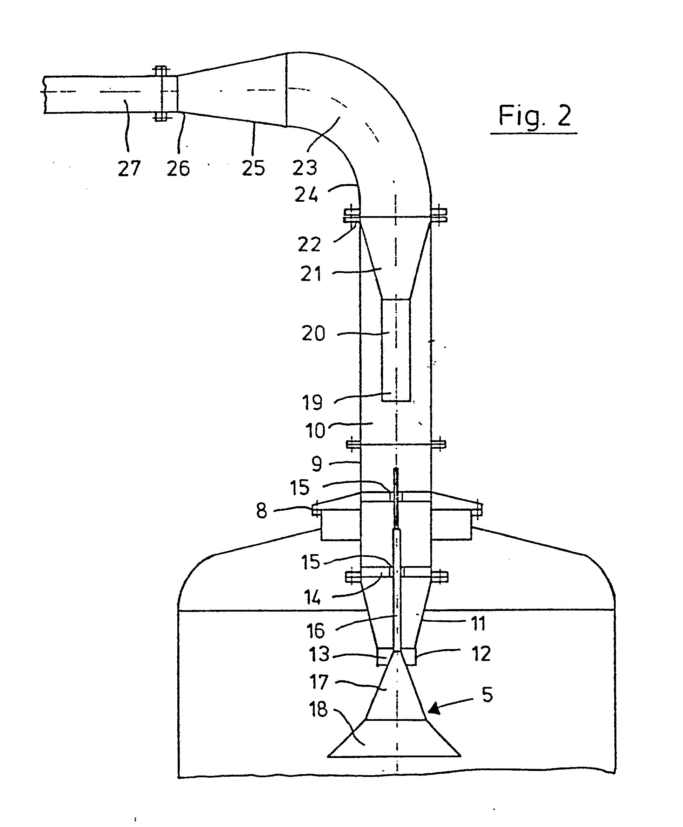

Fig. 5 einen Schnitt gemäß Linie V-V der Fig. 3.

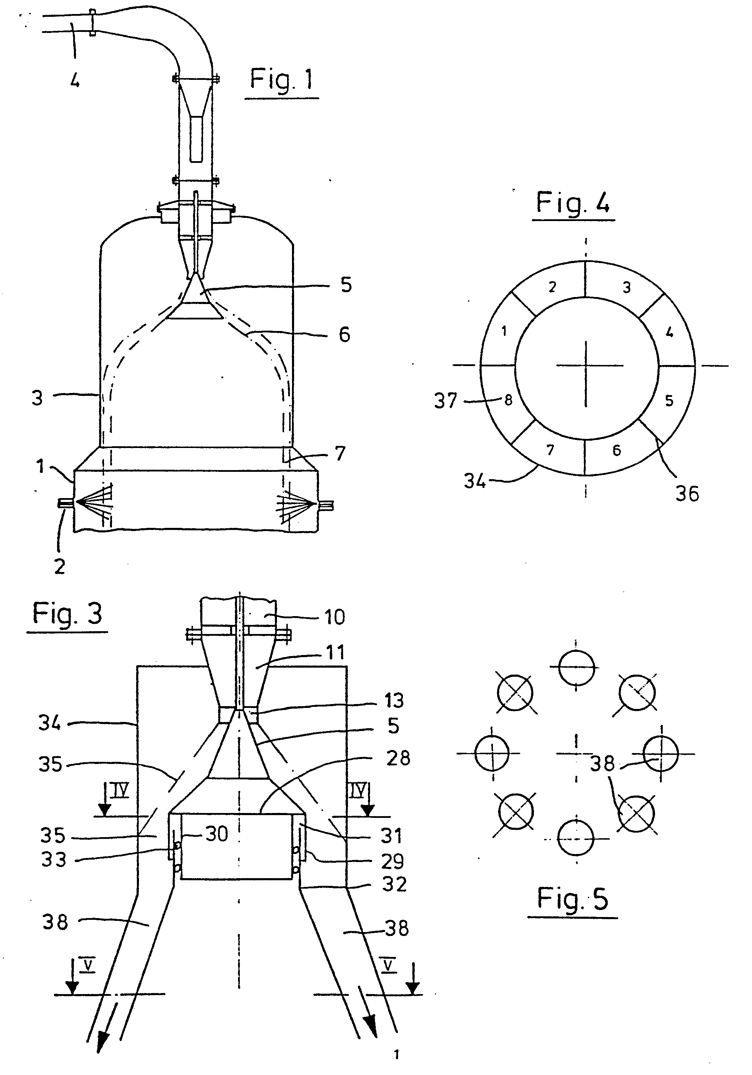

Gemäß Fig. 1 weist ein zylindrischer, vertikal aufgestellter Behälter 1 über seinen Umfang verteilt eine Mehrzahl von Sprühdüsen 2 auf, mit denen im Behälter herabfallendes staubförmiges oder feinkörniges Schüttgut mit einer Flüssigkeit besprüht werden soll. Der Behälteroberteil 3 ist ebenfalls zylindrisch und koaxial zum Behälterteil 1, jedoch mit geringerem Durchmesser ausgeführt. In den Kopf des Behälters mündet eine Förderleitung 4 für das darin pneumatisch geförderte Schüttgut, das innerhalb des Behälteroberteils 3 in einem vertikalen Strom konzentrisch auf die Spitze des Verteilerkegels 5 trifft, der das Material nach außen ablenkt, so daß es in Gestalt eines kegligen, hohlen Schleiers 6 von dem Verteilerkegel 5 gleichmäßig nach allen Seiten abströmt, gegen die konzentrisch zum Verteilerkegel 5 liegende Wand des Behälteroberteils 3 prallt und dann in Gestalt eines zylindrischen Schleiers 7 mit gleichförmiger Umfangsverteilung des Feststoffs nach unten fällt.

Einzelheiten der Verteilervorrichtung ergeben sich aus Fig. 2. Der Behälteroberteil 3 besitzt einen oberen Öffnungsflansch 8, an den vertikal und konzentrisch ein Rohrstück 9 angeflanscht ist, das die Zuführungskammer 10 enthält. Das obere Ende des Rohrstücks 9 bildet die weiter unten noch zu erläuternde Einlaßöffnung. Das untere Ende des Rohrstücks 9 ist verbunden mit einem koaxial dazu angeordneten, kegelstumpfförmigen Rohrstück 11, das den Auslaßkanal bildet und in einem etwa zylindrischen Endstück 12 ausläuft, das die Auslaßöffnung 13 bildet. Der Kegelöffnungswinkel des Rohrstücks 11 ist zweckmäßigerweise kleiner als 35° und liegt im dargestellten Beispiel bei 20°. Der Durchmesser der Auslaßöffnung 13 ist etwa halb so groß wie derjenige des Rohrstücks 9, was einem Viertel der freien Querschnittsfläche entspricht. Zweckmäßig ist es, wenn die Auslaßöffnung eine Querschnittsfläche von etwa einem Drittel bis einem Sechstel der freien Querschnittsfläche der Zuführungskammer aufweist.

In dem Rohrstück 9 befindet sich eine Mehrzahl von Traggliedern 14 in Form von radialen Armen, die von zwei zentralen Naben 15 radial zur Rohrwandung vorspringen und an dieser befestigt sind. Jede Nabe enthält eine Bohrung, die mit der vertikalen Mittelachse des Zuführungsraums koaxial ist. Durch die Naben 15 erstreckt sich koaxial mit dem Zuführungsraum 10,. dem Auslaßkanal 11 und der Auslaßöffnung 13 eine Tragstange 16, deren Länge so groß ist, daß sich ein unterer Endteil der Tragstange über die Auslaßöffnung 13 nach unten hinaus erstreckt und daß sich das obere, mit Gewinde versehene Ende der Tragstange nach oben über die Nabe 15 des oberen Traggliedes hinaus erstreckt. Diese Nabe enthält ein passendes Gewinde, und das Gewindestück der Tragstange 16 ist darin mittels einer Kontermutter gesichert. Die Länge, um die die Tragstange nach unten über die Auslaßöffnung 13 hinaussteht, kann durch Lösen der Kontermutter und Verdrehung der Tragstange und wieder Festziehen der Kontermutter verstellt werden.

Am unteren Endteil der Tragstange 16 ist als Deflektor der Verteilerkegel 5 befestigt, dessen äußere Oberflächen von der Auslaßöffnung 13 weg divergieren. Der erste, obere Kegelteil 17 fluchtet koaxial mit dem Auslaßkanal 11, 12 und erstreckt sich mit seinem oberen Teil in die Auslaßöffnung 13 hinein, so daß ein Ringraum zwischen dem oberen Kegelteil 17 und der Innenfläche der Auslaßöffnung 13 gebildet wird. Der Verteilerkegel 5 weist außerdem einen zweiten, unteren Kegelteil 18 auf, der einen größeren Kegelöffnungswinkel als der erste, obere Kegelteil 17 und einen größeren Durchmesser aufweist, so daß der zweite, untere Kegelteil im Vergleich mit dem ersten, oberen nach außen erweitert und abgeflacht ist. Im dargestellten Beispiel beträgt der Kegelöffnungswinkel des ersten Kegelteils 45° und der des zweiten Kegelteils 90°. Abwandlungen sind selbstverständlich möglich.

Wenn für den Anwendungsfall der Fig. 1 auf möglichst geringer vertikaler Länge des Behälters eine möglichst weite, gleichmäßige Verteilung des Guts angestrebt wird, ist die Zunahme des Öffnungswinkels und des Verteilerkegels 5 von sehr großem Vorteil. Wenn hingegen eine Aufteilung auf mehrere Teilströme gemäß dem Beispiel der Fig. 3 gewünscht wird, kann ggf. auf die Zunahme des Öffnungswinkels verzichtet werden, obwohl sie auch in diesem Zusammenhang zweckmäßig ist. Der Verteilerkegel 5 läßt sich mit zunehmendem Öffnungswinkel verhältnismäßig leicht herstellen, wenn er aus zwei Teilkegeln unterschiedlichen Öffnungswinkels zusammengesetzt wird. Selbstverständlich kann er aber auch aus mehr als zwei Teilkegeln bestehen. Es kann auch eine gleichmäßige, kurvenförmige, stufenlose Zunahme des Kegelöffnungswinkels vorgesehen sein. Unter Kegelöffnungswinkel ist der Winkel zwischen zwei diametral zueinander versetzten Mantellinien zu verstehen.

Die Einlaßöffnung 19 zum Zuführungsraum 10 wird von einem koaxial zu der Zuführungskammer 10 angeordneten Rohrstück 20 gebildet, das über einen in Strömungsrichtung sich kegelig verengendes Rohrstück 21 an den oberen Flansch 22 des Rohrstücks 9 angeschlossen ist, so daß das kegelige Rohrstück 21 und das zylindrische Rohrstück 20 in das Zuführungsrohr 10 konzentrisch hineinragen. Die freie Querschnittsfläche der Einlaßöffnung 19 ist etwa 3 bis 8 mal so klein wie dijenige der Zuführungskammer 10. Das obere, offene Ende des kegeligen Rohrstücks 21 hat etwa denselben Durchmesser wie die Zuführungskammer 10. Der Kegelöffnungswinkel des Rohrstücks 21 liegt zweckmäßigerweise zwischen 10° und 35°, im dargestellten Beispiel bei 20°.

Weiter stromauf schließt sich eine Entspannungskammer 23 an, die kreisförmige Querschnittsgestalt hat und aus einem gekrümmten Rohrstück 24, dessen Durchmesser mit demjenigen des Rohrstücks 9 etwa übereinstimmt, und einem kegelstumpfförmigen Einlaßdiffusor 25 gebildet ist, dessen enges Einlaßende 26 sich mit gleichem Durchmesser an die stromauf angeschlossene Förderleitung 27 anschließt. Das Rohrstück 24 ist als Rohrbogen ausgebildet, kann aber selbstverständlich auch gerade sein. Der Kegelöffnungswinkel des Diffusors 25 soll klein sein, um eine Herabsetzung der Strömungsgeschwindigkeit des Förderstroms bzw. des Fördergases zu erzielen und beträgt im dargestellten Fall etwa 20°. Der Innendurchmesser der Förderleitung 27 ist höchstens etwa halb so groß wie derjenige des Rohrbogens 24 und des Rohrstücks 9. Die letzteren haben also etwa die drei- bis sechsfache, vorzugsweise etwa vierfache freie Querschnittsfläche wie die Förderleitung.

Das Rohrstück 9 ragt zumindest mit seiner Auslaßöffnung 13 in den oberen Behälterteil 3 hinein. Auch der Verteilerkegel 5 liegt innerhalb des Behälters. Das Einlaßende der Zuführungskammer 10 liegt außerhalb des Behälters. Das Rohrstück 9 kann gegenüber dem Behälter bzw. gegenüber seinem mit dem Behälter verbindenden Flansch durch Streben versteift sein.

Während des Betriebs wird staubförmiges oder feinkörniges Schüttgut von der Förderluft in der Förderleitung 27 in die Entspannungskammer 23 eingetragen, wobei eine Verringerung der Luftgeschwindigkeit stattfindet und der Feststoff auf die Innenflächen des unteren Teils der Entspannungskammer trifft. Das Schüttgut wird dann pneumatisch in die kreisförmige Einlaßöffnung 19 gefördert, wo es infolge von deren kreisförmiger Gestalt gebündelt wird in Entfernung von den Innenwänden der Zuführungskammer 10 und nahe deren Mittelachse. Möglicherweise verungleichmäßigende Einflüsse der Form der Förderleitung bzw. der Entspannungskammer 23 vor der Verengung 20, 21 werden dadurch beseitigt.

Der Strom des gleichförmig verteilten Schüttguts tritt in die Einlaßöffnung 19 der Zuführungskammer 10 ein, strömt an den Traggliedern 14 und der Tragstange 16 vorbei zu dem Auslaßkanal 11, wo infolge der Form der Innenflächen des Auslaßkanals von den Innenwänden der Zuführungskammer. soweit es durch Auftreffen auf die Tragglieder und die Tragstange abgelenkt wurde, gebündelt und in einen Strom gleichmäßiger Verteilung geformt wird. Der Strom wird dann auf den oberen Teil 17 des Verteilerkegels 5 gefördert, wo er durch Auftreffen auf dessen Außenfläche radial nach außen gerichtet und dann weiter ausgebreitet wird durch Auftreffen auf den unteren Teil 18 des Verteilerkegels 5, bis das Schüttgut auf die zylindrischen Wände des oberen Behälterteils 3 oder einer entsprechenden zylindrischen Trennwand trifft. Der Strom des Schüttguts wird dadurch in einen ringförmigen Vorhang mit gleichmäßiger Verteilung über den Umfang umgeformt.

Die Abmessungen des Vorhangs, insbesondere dessen Durchmesser, können verändert werden durch Verstellung der Position des Verteilerkegels 5 im Verhältnis zu der Auslaßöffnung 13 der Zuführungskammer, wodurch der Innendurchmesser des Vorhangs verändert wird, sowie durch Änderung des Durchmessers einer innerhalb des oberen Behälterteils 3 vorgesehenen zylindrischen Trennwand, auf die der konisch sich ausbreitende Strom trifft, zur Veränderung des Außendurchmessers des davon zylindrisch herabfallenden Schüttgutvorhangs. Ferner können die Dimensionen des Vorhangs durch Veränderung der Luftgeschwindigkeit verändert werden, durch die das Schüttgut gefördert wird.

Statt der Zuführungskammer 10 eine Entspannungskammer 23 vorzuschalten, kann die Förderleitung 27 auch direkt an das konvergierende Rohrstück 21 angeschlossen sein. Jedoch leistet die Entspannungskammer 23 eine zusätzliche Vergleichmäßigung des Guts beim Eintritt in die Zuführungskammer 10.

Die zylindrische Trennwand, auf die der kegelig sich ausbreitende Schüttgutstrom trifft, kann von dem oberen Behälterteil 3 selbst oder einer gesonderten, darin angebrachten Trennwand gebildet sein, Diese kann auch an dem Rohrstück 9 oder einem damit verbundenen Teil verbunden sein, statt an der Behälterwand 3 befestigt zu sein.

In der Ausführungsform gemäß Fig. 3 sind die Zuführungskammer 10, deren Auslaßkanal 11, 13, der Verteilerkegel 5 sowie dessen Anbringung innerhalb des Zuführungsraums 10 sowie die dem Zuführungsraum 10 vorgeschalteten Einrichtungen genauso ausgebildet wie im Falle des zuvor erläuterten Ausführungsbeispiels.

Am Ablaufende 28 des Verteilerkegels 5 ist dicht ein zylindrischer Rohrabschnitt 29 konzentrisch und mit gleichem Durchmesser angeschlossen. Mit etwas kleinerem Durchmesser, ebenfalls konzentrisch ist ein weiteres Rohrstück 30 angeschlossen, das mit dem Rohrstück 29 einen zylindrischen Ringraum 31 einschließt. In diesen Ringraum ragt von unten konzentrisch ohne direkte Berührung ein Rohrstück 32, das über Dichtungsringe 33 gegenüber dem Rohrstück 30 abgedichtet ist. Umgeben wird der Auslaßbereich der Zuführungskammer 10 und der Verteilerkegel 5 von einem Behälter 34, der mit dem Rohrstück 32 einen Ringraum 35 einschließt. Der Behälter 34 braucht nicht so groß zu sein wie dargestellt, sondern kann beispielsweise oben auch gemäß der strichpunktierten Linie 35' begrenzt sein.

Der Ringraum 35 enthält gemäß Fig. 4 eine der Zahl der gewünschten Teilströme entsprechende Zahl von radialen Trennwänden 36, die gleichen Umfangsabstand voneinander haben. Die durch diese Trennwände innerhalb des Ringraums 35 voneinander getrennten Abteilungen 37 gehen nach unten in Rohrleitungen 38 über, die beispielsweise bei der Aufgabe von Kohlenstaub auf ein Feuerungsbett den einzelnen Beschickungsfeldern zugeteilt sind. Die Rohrleitungen 3ß sind dicht an die Zuführungskammer 10 angeschlossen, so daß der von der pneumatischen Förderleitung 27 (Fig. 2) her wirkende Förderdruck auch in den weiterführenden Förderleitungen 38 wirksam ist.

Auch auf dem Verteilerkonus 5 können Führungsbleche oder Führungsrinnen vorgesehen sein, die den Trennwänden 36 bzw. den von diesen gebildeten Abteilungen 37 örtlich zugeordnet sind. Erforderlich ist dies jedoch nicht.

Der Abstand zwischen der Einlaßöffnung 19 und der Auslaßöffnung 13 ist zweckmäßigerweise größer als der dreifache Durchmesser der Einlaßöffnung und/oder als der zweifache Durchmesser der Zuführungskammer 10.

Der Abstand zwischen der Einlaßöffnung 19 und dem Beginn des sich verengenden Auslaßkanals ist zweckmäßigerweise größer als die dreifache Differenz der Durchmesser der Zuführungskammer 10 und der Einlaßöffnung 19 plus 0,3 m. Diese Länge des zylindrischen Teils 20 des Einlaßkanals sollte gleich oder größer sein als etwa das Fünffache seines Durchmessers.

Die Fördergeschwindigkeiten in der Förderleitung 27 und/oder dem Ringspalt der Auslaßöffnung 13 liegen zweckmäßigerweise über 20 m/sec, insbesondere über 30 m/sec.

**Patentansprüche**

1. Vorrichtung zum gleichmäßigen Verteilen eines pneumatisch geförderten Schüttgutstroms auf eine ausgedehntere, ggf. durch Wände in Teilströmungsquerschnitte aufgeteilte Querschnittsfläche mit einer Zuführungskammer (10) für das Schüttgut, die eine Einlaßöffnung (19) und einen kanal (11,12) bildet, und einem sich daran anschließenden Verteilerkegel (5), dadurch gekennzeichnet, daß die mit dem Auslaßkanal (11,12) koaxiale Einlaßöffnung (19) enger als die Zuführungskammer (10) ausgebildet ist und einem konvergierenden, ebenfalls koaxialen Rohrstück (21) folgt.

2. Vorrichtung nach Anspruch 1, dadurch gekennzeichnet, daß der Verteilerkegel (5) sich aus einem ersten Kegelteil (17) und einem zweiten Kegelteil (18) zusammensetzt, deren Kegelflächen aneinander anschließen, wobei der Kegelöffnungswinkel des ersten Kegelteils kleiner ist als der des zweiten Kegelteils.

3. Vorrichtung nach Anspruch 2, dadurch gekennzeichnet, daß der Kegelöffnungswinkel des ersten Kegelteils (17) kleiner und derjenige des zweiten Kegelteils (18) größer als 60° ist.

4. Vorrichtung nach einem der Ansprüche 1 bis 3, dadurch gekennzeichnet, daß sie Einrichtungen zum Verstellen des Verteilerkegels im Verhältnis zum Zuführungsraum zur Veränderung der Abmessungen des davon abströmenden Schüttgutvorhangs aufweist.

5. Vorrichtung nach einem der Ansprüche 1 bis 4, dadurch gekennzeichnet, daß die Einrichtung zum Einstellen des Verteilerkegels (5) eine Tragstange (16) umfaßt, die sich durch den Auslaßkanal (11,13) längs dessen Mittelachse erstreckt und daß der erste Kegelteil (17) des Verteilerkegels (5) an dem Ende der Tragstange (16) angebracht ist.

6. Vorrichtung nach einem der Ansprüche 1 bis 5, dadurch gekennzeichnet, daß der erste und der zweite Kegelteil (17,18) kreiskonisch ausgebildet sind und mit der Auslaßöffnung (13) zur Bildung eines ringförmigen Vorhangs gleichmäßig verteilten Schüttguts zusammenwirken.

7. Vorrichtung nach einem der Ansprüche 1 bis 6, dadurch gekennzeichnet, daß sie eine im wesentlichen kreisförmige Wand (3) in Abstand von dem und umgebend den Verteilerkegel (5) aufweist.

8. Vorrichtung nach einem der Ansprüche 1 bis 7, dadurch gekennzeichnet, daß dem konvergierenden Rohrstück (21) eine Querschnittserweiterung (23) mit Diffusor (25) zur Verminderung der Geschwindigkeit des Fördergases vorgeschaltet ist.

9. Vorrichtung nach Anspruch 8, dadurch gekennzeichnet, daß eine Änderung der Förderrichtung im Bereich der Querschnittserweiterung (23) vorgesehen ist.

10. Vorrichtung nach einem der Ansprüche 1 bis 9, dadurch gekennzeichnet, daß dem Verteilerkegel (5) ein Ringraum (35) nachgeschaltet ist, der eine der Zahl der zu bildenden Teilströme entsprechende Zahl von radialen Trennwänden (36) aufweist.

11. Vorrichtung nach einem der Ansprüche 1 bis 10, dadurch gekennzeichnet, daß die Zuführungskammer (10), deren Auslaßkanal (11,12) sowie die Mittelachse des Verteilerkegels (5) vertikal angeordnet sind.

**Claims:**

1. Device for the uniform distribution of a pneumatically conveyed bulk material stream to a wider area, possibily divided into two part flow walls, with a receiver chamber (10) for the bulk material having an inlet opening (19) and a discharge duct (11,12) converging towards a discharge opening (13) and a subsequent distributor cone (5), characterized in that the inlet opening (19) coaxially aligned with the discharge duct (11,12) is designed narrower than the receiver chamber (10) and continues into a converging section of piping (21) which is also coaxial.

2. Device in accordance with claim 1 characterized in that, the distributor cone (5) is made up of a first conical section (17) and a second conical section (I9), the conical surfaces of which adjoin, when the bore of the conical opening of the first conical section is smaller than that of the second conical section.

3. Device in accordance with claim 2, characterized in that, the opening angle of the cone of the first conical section (17) is less than and that of the second conical section (18) is greater than 60°.

4. Device in accordance with any one of claims 1 to 3, characterized in that it includes means for adjusting the distributor cone in relation to the collector space for the purpose of varying the dimensions of the curtain of bulk material which flows from it.

5. Device in accordance of any one of claims 1 to 4, characterized in that, the means for adjusting the distributor cone (5) includes a carrier rod (16) which extends through the discharge duct (11,13) along the central axis and that the conical section (17) of distributor cone (5) is arranged at the end of carrier rod (16).

6. Device in accordance of any one of claims 1 to 5, characterized in that, that the first and second conical sections (17,18) are spherical and conical and act together with the discharge opening (13) to form an annular curtain of uniformly distributed bulk material.

7. Device in accordance of any one of claims 1 to 6, characterized in that, it has a wall (3) mainly circular and at a distance and surrounding the distributor cone (5).

8. Device in accordance of any one of claims 1 to 7, characterized in that, in front of the converging pipe section (21) there is situated a diverging area (23) with a diffuser (25) for reducing the speed of the conveyor gas.

9. Device in accordance with claim 8 characterized in that, a modification of the direction of conveying is provided in the region of the diverging area (23).

10. Device in accordance with any one of claims 1 to 9, characterized in that, subsequent to the distributor cone (5) there is arranged an annular space (35) having a number of partitions (36) equivalent in number to the part streams which are to be formed.

11. Device in accordance with any one of claims 1 to 10, characterized in that, the receiver chamber (10), its discharge duct (11,12), as well as the central axis of the distributor cone (5) are all vertically arranged.

**Revendications**

1. Dispositif pour la distribution uniforme d'un courant de matière en vrac entraîné pneumatiquement sur une aire étendue, éventuellement divisée en sections d'écoulement partiel par des cloisons, comprenant une chambre d'arrivée (10) pour la matière en vrac qui forme un orifice d'admission (19) et un conduit de décharge (11, 12) convergeant vers un orifice de décharge (13), ainsi qu'un cône distributeur (5) à la suite de cette chambre, caractérisé en ce que l'orifice d'admission (19), coaxial avec le conduit de décharge (11, 12), est réalisé sous une forme plus étroite que la chambre d'arrivée (10) et fait suite à une partie de tube convergente (21) également coaxiale.

2. Dispositif selon la revendication 1, caractérisé en ce que le cône distributeur (5) se compose d'une première partie conique (17) et d'une seconde partie conique (18) dont les surfaces coniques font suite l'une à l'autre, l'angle d'ouverture de cône de la première partie conique étant plus petit que celui de la seconde partie conique.

3. Dispositif selon la revendication 2, caractérisé en ce que l'angle d'ouverture de cône de la première partie conique (17) est inférieur à 60° et celui de la seconde partie conique (18) est supérieur à 60°.

4. Dispositif selon l'une quelconque des revendications 1 à 3, caractérisé en ce qu'il comporte des dispositifs pour déplacer le cône distributeur par rapport à la chambre d'arrivée, afin de modifier les dimensions du rideau de matière en vrac qui s'écoule de cette chambre.

5. Dispositif selon l'une quelconque des revendications 1 à 4, caractérisé en ce que le dispositif de réglage du cône distributeur (5) comprend une barre porteuse (16) qui s'étend à travers le conduit de décharge (11, 13) le long de l'axe de celui-ci, et en ce que la première partie conique (17) du cône distributeur (5) est montée à l'extrémité de la barre porteuse (16).

6. Dispositif selon l'une quelconque des revendications 1 à 5, caractérisé en ce que la première et la seconde parties coniques (17, 18) sont réalisées avec une forme conique circulaire et coopèrent avec l'orifice de décharge (13) pour la formation d'un rideau annulaire de matière en vrac uniformement distribuée.

7. Dispositif selon l'une quelconque des revendications 1 à 6, caractérisé en ce qu'il comporte une cloison (3) sensiblement circulaire à distance du cône distributeur (5) et entourant celui-ci.

8. Dispositif selon l'une quelconque des revendications 1 à 7, caractérisé en ce que le conduit tubulaire convergent (21) est précédée d'un élargissement de la section (23) avec diffuseur (25), destiné à réduire la vitesse du gaz transporteur.

9. Dispositif selon la revendication 8, caractérisé en ce qu'il est prévu un changement de la direction de transport dans la région de l'elargissement de la section (23).

10. Dispositif selon l'une quelconque des revendications 1 à 9, caractérisé en ce que le cône distributeur (5) est suivi d'une chambre annulaire (35) qui présente un nombre de cloisons de séparation (36) correspondant au nombre de courants partiels à former.

11. Dispositif selon l'une quelconque des revendications 1 à 10, caractérisé en ce que la chambre d'arrivée (10), son conduit de décharge (11, 12), ainsi que l'are du cône distributeur (5) sont disposés verticalement.

0 076 472

Fig. 1

Fig. 4

Fig. 3

Fig. 5

0 076 472

Fig. 2

3